# EUROPEAN PATENT APPLICATION

(11) **EP 3 276 566 A1**
(43) Date of publication of application: **31.01.2018**
(21) Application number: 16305960.3
(22) Date of filing: 26.07.2016
(51) Int. Cl.: G06Q 30/06

(54) **METHOD, DEVICE, SERVER AND SYSTEM FOR SECURING A TRANSACTION RELATING TO A DEVICE**

(71) Applicant: GEMALTO SA, 92190 Meudon (FR)
(72) Inventor: DAO, Frederic, 13881 GEMENOS Cedex (FR); PREULIER, Eric, 13881 GEMENOS Cedex (FR); POTTIER, Alexis, 13881 GEMENOS Cedex (FR); BAULT, Jean-Julien, 13881 GEMENOS Cedex (FR)

(57) **Abstract**

The invention relates to a method 20 for securing a transaction relating to a device.

According to the invention, a) a first server receives a message 22 including at least one identifier relating to the device. b) The first server receives from a second user a message 24 including a request for getting the device. c) The first server receives a message 26 including an identifier relating to a transaction, the transaction identifier being associated with the device identifier. d) The first server or another server connected to the first server sends, based upon the device identifier, to the device a message 28 including a command for locking the device accompanied with a security code, the security code allowing to unlock the device. e) The device changes 210 to a locked status by executing the device locking command, the locked status preventing the device from being used. f) The first server or another server connected to the first server sends to the second user a message 212 including the security code. g) The second user gets the device. h) The second user provides the device with the security code 214. i) The device determines 216 whether the provided security code does or does not match the received security code. j) Only if the provided security code matches the received security code, the device changes 218 to an unlocked status. k) The device sends to the first server a message 220 including information about the unlocked status of the device. And I) the first server sends to a second server a message 222 including a confirmation relating to the transaction accompanied with the transaction identifier.

The invention also relates to corresponding device, first server and system.

## Description

### Field of the invention:

The invention relates generally to a method for securing a transaction relating to a device.

Furthermore, the invention also pertains to a device and a first server for securing a transaction relating to a device.

Finally, the invention relates to a system for securing a transaction relating to a device as well.

### State of the art:

As known per se, when a mobile (tele)phone, as an (electronic) device, is owned by a user, the user may desire to sell or loan the device to another user.

However, the two users want to be sure that a corresponding transaction relating to the phone is securely performed.

Thus, there is a need to provide a solution that allows securing a transaction relating to a device between a first user and a second user.

### Summary of the invention:

The invention proposes a solution for securing a transaction relating to a device.

According to the invention, the method comprises the following steps. a) A first server receives a message including at least one identifier relating to the device. b) The first server receives from a second user a message including a request for getting the device. c) The first server receives a message including an identifier relating to a transaction, the transaction identifier being associated with the device identifier. d) The first server or another server connected to the first server sends, based upon the device identifier, to the device a message including a command for locking the device accompanied with a security code, the security code allowing to unlock the device. e) The device changes to a locked status by executing the device locking command, the locked status preventing the device from being used. f) The first server or another server connected to the first server sends to the second user a message including the security code. g) The second user gets the device. h) The second user provides the device with the security code. i) The device determines whether the provided security code does or does not match the received security code. j) Only if the provided security code matches the received security code, the device changes to an unlocked status. k) the device sends to the first server a message including information about the unlocked status of the device and I) the first server sends to a second server a message including a confirmation relating to the transaction accompanied with the transaction identifier.

The principle of the invention consists in that a first user identifies (e.g. when already registered) or registers before a first server an identified device to be transferred, i.e. to be a subject of a transaction. The first server obtains from a second user a request for getting the device. Then, the first server gets an identifier relating to a transaction relating to the device, as an initiated transaction. The first server or another server connected hereto transmits to the device a command for locking the device along with a security code. The device gets locked and becomes unusable until the security code is used for unlocking a thus locked device. The first server or another server connected hereto sends to the second user the security code. The second user receives the locked device and submits to the locked device the received security code. Only if the device verifies successfully that the submitted security code is the received security code, as an expected security code, the locked device gets unlocked. Once unlocked, the device can thus be used by the second user. Then, the device informs the first server about an unlocked device status. The first server confirms before a second server, like e.g. a payment server, the initiated transaction, so as to validate the transaction from the second to the first user.

It is noteworthy that the transaction may be any type of transaction, like e.g. a sale, a leasing, a loan of or a subscription to the concerned device. The transaction may be performed in a temporary, recurring, or permanent manner. The transaction may be a payment transaction, a bit coin transaction, a loyalty point transaction or any right transaction.

It is to be noted that the first user and the second user may represent an entity or a company which exchanges with the first server (and/or (an)other server(s) connected hereto) by using one or two terminals, like e.g. Personal Computers (or PC) or laptops.

The invention solution firstly needs a device registration before a first server for a device to be locked and a submission of a security code to be received from (or through) the first server to use or re-use the device, so as to validate a corresponding transaction between a first user (or an entity or a company) and a second user (or an entity or a company).

The invention solution improves the security of a transfer of the device for a transaction between two users with respect to the afore mentioned prior art solution.

Thus, the invention solution by using the first server reduces a risk of fraud for the transaction between the two involved users.

Contrary to the afore mentioned prior art solution, a receiver of a device registered before a first server activates or re-activates a use of the device only when the device receiver provides the device with a security code to be received from the first server (or another server connected hereto), as a security server.

According to a further aspect, the invention is a device for securing a transaction relating to a device.

According to the invention, the device is configured to receive a message including a command for locking the device accompanied with a security code, the security code allowing to unlock the device. The device is configured to change to a locked status by executing the device locking command, the locked status preventing the device from being used. The device is configured to be provided with the security code. The device is configured to determine whether the provided security code does or does not match the received security code. The device is configured to change, only if the provided security code matches the received security code, to an unlocked status and to send to the first server a message including information about the unlocked status of the device.

The device may be any electronic device, like e.g. a user terminal or a Secure Element (or SE), comprising data processing means, data storing means and one or several Input/Output (or I/O) communication interfaces.

Within the present description, an SE is a smart object that includes a chip that protects access to stored data and is intended to communicate data with an SE host device, like e.g. a user terminal.

The SE may be of any type.

As a removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card (or another medium) to be coupled or connected to a chip host device.

The SE may be a wearable device, like e.g., a smart accessory, that exchanges, in a ContacT-Less (or CTL) manner, with another device.

According to still a further aspect, the invention is a first server for securing a transaction relating to a device.

According to the invention, the first server is configured to receive a message including at least one identifier relating to the device. The first server is configured to receive from a second user a message including a request for getting the device. The first server is configured to receive a message including an identifier relating to a transaction, the transaction identifier being associated with the device identifier. The first server is configured to send, based upon the device identifier, to the device a message including a command for locking the device accompanied with a security code, the security code allowing to unlock the device. The first server is configured to send to the second user a message including the security code. The first server is configured to receive from the device a message including information about the unlocked status of the device and to send to a second server a message including a confirmation relating to the transaction accompanied with the transaction identifier.

According to still a further aspect, the invention is a system for securing a transaction relating to a device.

According to the invention, the system comprises at least a device and a first server. The first server is configured to receive a message including at least one identifier relating to the device. The first server is configured to receive from a second user a message including a request for getting the device. The first server is configured to receive a message including an identifier relating to a transaction, the transaction identifier being associated with the device identifier. The first server is configured to send, based upon the device identifier, to the device a message including a command for locking the device accompanied with a security code, the security code allowing to unlock the device. The device is configured to change to a locked status by executing the device locking command, the locked status preventing the device from being used. The first server is configured to send to the second user a message including the security code. The device is configured to be provided with the security code. The device is configured to determine whether the provided security code does or does not match the received security code. The device is configured to change, only if the provided security code matches the received security code, to an unlocked status. The device is configured to send to the first server a message including information about the unlocked status of the device. And the first server is configured to send to a second server a message including a confirmation relating to the transaction accompanied with the transaction identifier.

The device may be coupled to or incorporate a chip.

The chip may be fixed to, removable from, or mechanically independent from the device, as a chip host device.

The chip is preferably included within an SE.

The invention does not impose any constraint as to a kind of the SE type.

As a removable SE, it may be a SIM type card, an SRM, a smart dongle of the USB type, a (micro-)SD type card or a MMC or any format card (or another medium) to be coupled or connected to a chip host device.

As a chip mechanically independent from the device, it may be a wearable device, like e.g., a smart accessory, that exchanges, in a CTL manner, with the device.

As to the chip host device, it may be constituted by any electronic device, like e.g. a terminal, comprising data processing means, data storing means and one or several I/O communication interfaces.

### Brief description of the drawings:

Additional features and advantages of the invention will be more clearly understandable after reading a detailed description of one preferred embodiment of the invention, given as one indicative and non-limitative example, in conjunction with the following drawings:

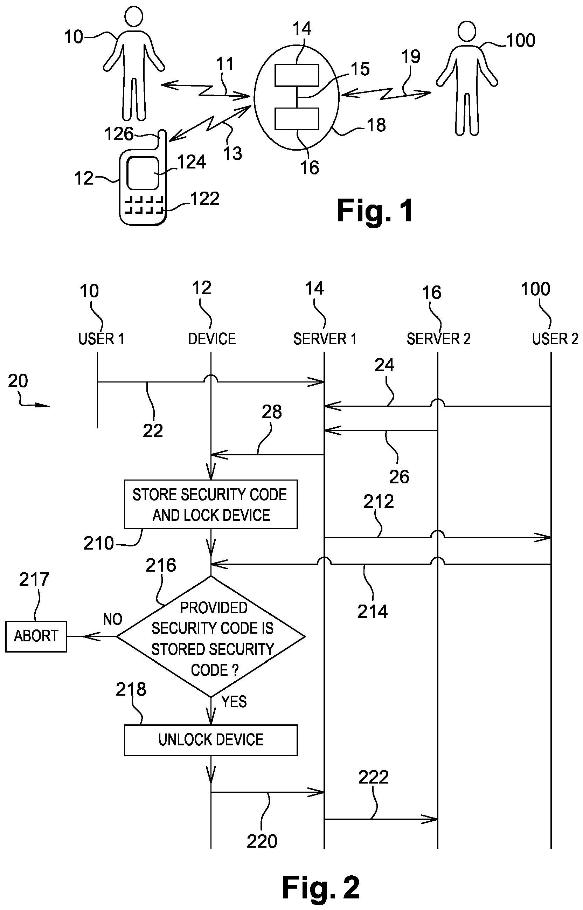

- Figure 1 is a simplified diagram of a (mobile) phone, a first user, a second user and a computer network, the computer network comprising a first and a second server, the phone and the servers being arranged to secure a transaction relating to the phone by using a security code provided to the device and the second user to unlock a locked phone, according to the invention; and
- Figure 2 illustrates an example of a flow of messages exchanged between the phone, the users and the servers of figure 1, so that, after a phone registration by the first user to the first server and a phone request from the second user, the phone is locked by (or through) the first server and then unlocked by the second user by using a provided security code.

### Detailed description:

Herein under is considered an embodiment in which the invention method for securing a transaction relating to a device is implemented notably by a phone, as a (user) terminal, a device and a standalone entity. In other words, the device does not cooperate with any chip, so as to secure a transaction relating to the device.

According to another embodiment (not represented), the invention method for securing a transaction relating to a device is implemented by a chip incorporated within or coupled to the device, as a chip host device. The chip, like e.g. an embedded Universal Integrated Circuit Chip (or eUICC), may be incorporated, possibly in a removable manner, on a Printed Circuit Board (or PCB) of a (user) terminal, as a chip host device. The chip may incorporate at least part of the terminal component(s), like e.g. a baseband processor, an application processor and/or (an)other electronic component(s). Alternately, instead of an eUICC, the chip may be a Trusted Execution Environment (or TEE), as a secure area of a terminal processor and a secured runtime environment. The chip is preferably included within an SE. The SE may nevertheless have different form factors. Instead of being embedded within its host device, the chip may be carried by a medium, such as a smart card, like e.g. a SIM type card, a dongle, like e.g. a USB type dongle, or a wearable device, like e.g. a smart watch, a smart jewel or a smart accessory. According to such an invention embodiment, the chip is adapted to carry out the functions that are carried out by the phone and that are described infra.

Naturally, the herein below described embodiment is only for exemplifying purposes and is not considered to reduce the scope of the invention.

**Figure 1** shows schematically a first user 10, a mobile phone 12, a second user 100, a first server 14 and a second server 16.

For sake of simplicity, the first user 10, the mobile phone 12, the second user 100, the first server 14 and the second server 16 are termed infra the U1 10, the device 12, the U2 100, the SR1 14 and the SR2 16 respectively.

The U1 10 may play the role of a seller of the device 12 while the U2 100 may play the role of a buyer of the device 12.

The U1 10 is connected, possibly from the device 12 (only for a device 12 registration step and a device 12 locking step) or a separate device (not represented), like e.g. a PC1, as a first terminal, to the SR1 14.

The U2 100 is connected from a separate device (not represented), like e.g. the first terminal or a PC2, as a second terminal, to the SR1 14.

A bank account or the like of the U2 100 is to be debited, preferably through the SR2 16 while a bank account or the like of the U1 10 is to be credited preferably through the SR2 16, when a transaction relating to the device 12 is successfully validated during a secure process as further described infra. Such a transaction may be a payment transaction or the like.

A Computer Network (or CN) 18 includes and/or is connected to the SR1 14 and/or the SR2 16.

The device 12 may be mobile or fixed (i.e. not mobile).

The device 12 may be a Personal Digital Assistant (or PDA), a vehicle, a set-top box, a tablet computer, a PC, a desktop computer, a laptop computer, a video player, an audio player, a portable TeleVision (or TV), a media-player, a game console, a netbook, an electronic accessory, such as a wearable device, like e.g. smart glasses, a smart watch or a smart jewel, a domestic appliance or any other electronic device that is connected or connectable to the SR1 14.

Instead of a phone, the device may be any computer device including means for processing data, comprising (or being connected to) wire, wireless or CTL communication means for exchanging data with outside, and comprising (or being connected to) means for storing data.

Within the present description, the adjective "wireless" used within the expression "wireless communication means" denotes notably that the communication means communicates via one or several Long Range (or LR) Radio-Frequency (or RF) links.

The LR RF may be fixed at several hundreds of MHz.

Within the present description, the adjective "CTL" used within the expression "CTL communication means" denotes notably that the communication means communicates via one or several Short Range (or SR) RF links. The SR RF link may be related to any technology that allows the device 12 to exchange data, through a so-termed CTL link with the device 12 exterior. The SR RF may be fixed at 13,56 MHz. The SR RF may be related to a Near Field Communication (or NFC) type technology, a Bluetooth type technology and/or a Bluetooth low energy type technology, as a CTL technology.

The device 12 includes data processing means, such as one (micro)processor(s) and/or one (micro)controller(s) (not represented), data storing means (not represented), as a phone memory(ies), and one or several I/O interfaces connected, through a control and data bus (not represented), to each other.

The device 12 includes preferably a keyboard 122 and a display screen 124, as a Man Machine Interface (or MMI).

Alternately, instead of an integrated MMI, the device 12 is connected or coupled to an external MMI, so as to communicate with a user(s).

The device I/O interface(s) allow(s) communicating data from the device 12 components to the device exterior and conversely.

The device memory stores an Operating System (or OS).

The device memory may store data relating to a Uniform Resource Identifier (or URI), a Uniform Resource Locator (or URL), an Internet Protocol (or IP) address and/or other data relating to an external entity to be addressed, like e.g. the SR1 14.

The device memory stores preferably an International Mobile Equipment Identity (or IMEI), a URI, a URL, an email address, an Internet Protocol (or IP) address, a Media Access Control (or MAC) address, a device certificate, an International Mobile Subscriber Identity (or IMSI), an IP Multimedia Private Identity (or IMPI), an IP Multimedia Public Identity (or IMPI), as data for identifying a (service) subscription for accessing a mobile network(s) and/or the like, as an identifier(s) relating to the device 12. Such a device identifier(s) allow(s) addressing the device 12.

The device (or a chip) memory may store one or several security keys, like e.g. a key(s) for enciphering/deciphering data, a key(s) for signing data, a key(s), as secret data, and/or one or several user credentials.

The device (or a chip) memory may be constituted by one or several EEPROMs (acronym for "Electrically Erasable Programmable Read-Only Memory"), one or several ROMs (acronym for "Read Only Memory"), one or several Flash memories and/or any other memories of different types, like one or several RAMs (acronym for "Random Access Memory").

The device memory (or a memory relating to a chip incorporated within or coupled to the device 12) stores an invention application, or termed applet (when written in Java language), for securing a transaction relating to the device 12. The invention application may be part of the OS or an application per se that is stored in a chip incorporated within or coupled to the device 12, as a more secure environment, like e.g., a TEE.

The invention application, when executed by a device (micro)processor (or (micro)controller or an SE chip (micro)processor or (micro)controller), allows receiving, from (an)other entity(ies), like e.g., a server, a message including a command for locking the device 12 accompanied with a security code.

The command for locking the device 12, such as a script, allows, when executed by a device (micro)processor (or a chip (micro)processor), locking the device 12, i.e. changing or switching from an unlocked to a locked status.

The locked status prevents the device 12 from being used by a user(s).

The security code may be:
- a One Time Password (or OTP);
- a passphrase;
- a password; and/or
- a Personal Identity Number (or PIN).

The security code allows, when effectively submitted by a user, unlocking the device 12, i.e. changing from the locked to an unlocked status.

A corresponding lock/unlock mechanism is preferably secured and may be implemented by a signed application to be executed by the device 12. The signed application may be signed by a device manufacturer, an application provider or on its behalf.

The invention application, when executed, allows being provided with a security code by a user.

The invention application, when executed, allows determining whether the provided security code does or does not match a security code received from e.g. the SR1 14. The device 12 (or an SE connected hereto) is arranged to store or let store the security code, as a reference and expected security code.

The invention application, when executed, allows changing, only if a security code submitted or provided by a user matches the received security code, to an unlocked status.

The invention application, when executed, may allow, e.g. prior to (or just after) changing to the unlocked status, erasing stored data and/or sending to another entity(ies), like e.g. the SR1 14 and/or another device(s) used by the U1 10, stored data. Thus, the device 12 does no more store or access any data relating to the U1 10, as user data, so as not to disclose to the U2 100 the concerned user data.

The invention application, when executed, allows, once unlocked, transmitting to an entity(ies), like e.g., the SR1 14 and/or another device(s) used by the U1 10, a message including information about the unlocked status relating to the device 12.

The invention application, when executed, may allow, possibly on an entity(ies) (like e.g. the SR1 14 or a chip embedded or coupled to the device 12) control, testing one or several capabilities relating to the device 12.

The capability(ies) relating to the device 12 may comprise a phone call capability, a Short Message Service (or SMS) type message sending and/or receiving capability, a Multimedia Message Service (or MMS) type message sending and/or receiving capability, an email type message sending and/or receiving capability, an MMI capability, an Internet browsing capability, a CTL type message sending and/or receiving capability, a wifi type message sending and/or receiving capability, a (data) display capability, a touch sensitive surface capability (by detecting a surface that has been previously e.g. highlighted is also touched) and/or any other device 12 capability(ies).

The invention application, when executed, may allow, once the device 12 has been tested, sending to another entity(ies), like e.g. the SR1 14 and/or a terminal used by the U2 100, one or several effective capabilities relating to the device 12, as a (device capability) test result.

The invention application, when executed, may allow, prior to sending any data, signing data to be sent by using a private key(s) relating to the device 12, so as to ensure that the data originates from the device 12. The used key(s) or a corresponding key(s), like e.g. a public device key, is(are) previously or simultaneously shared between the device 12 and a predetermined addressee(s) of the concerned data.

The invention application, when executed, may allow, prior to sending any data, enciphering data to be sent by using a key(s), so as to protect access to the concerned data. The used key(s) or a corresponding key(s) is(are) previously shared between the device 12 and a predetermined addressee(s) of the concerned data.

The device 12 is a device that may be used by firstly the U1 10 for launching an execution of the invention application and, secondly, when a U2 100 is authenticated by the device 12 by using the security code, the U2 100.

The device 12 is connected, via possibly an antenna 126 and a bi-directional RF link(s) 13, through the CN 18, to the SR1 14.

According to a particular embodiment, the CN 18 comprises or is connected to one mobile networks (not represented).

The CN 18 comprises or is connected to an Internet type network (not represented) or the like.

The CN 18 comprises the SR1 14 and the SR2 16.

The SR1 14 and the SR2 16 are hosted by either a respective dedicated computer or one and the same computer. The computer includes a processor(s), as data processing means (not represented), comprises and/or is connected to a memory(ies), as data storing means (not represented), and one or several I/O interfaces (not represented).

The SR1 14 is identified by a URI, a URL, an IP address or the like, as an identifier relating to the SR1 14 or first server identifier. The first server identifier allows addressing the SR1 14. The first server identifier may be stored within the device 12 memory (or a chip memory).

The SR1 14 may be operated by a service provider.

The SR1 14 may be included within an ecosystem (not represented), like e.g. a Mobile Network Operator (or MNO) back-end system, that comprises several servers managed by the service provider or on its behalf.

The SR1 14 is preferably dedicated to running an application for managing a first database and communicating data of the first database to outside.

The memory(ies) that is(are) accessible from the SR1 14 stores the first database.

The SR1 14 supports an application for securing a transaction relating to a device.

The SR1 14 is configured to receive a message including one or several identifiers relating to the device, as a subject of a transaction and optionally first user (or an entity or a company) data, like e.g. a U1 10 name and/or a U1 10 IP address, as first user data relating to the concerned device.

Alternately, the SR1 14 is adapted to receive a message including a request for registering, as a subject of a transaction, a device along with an IMEI and/or the like, as a device identifier(s) and optionally first user (or an entity or a company) data, like e.g. a U1 10 name and/or a U1 10 IP address, as first user data relating to the concerned device.

The device identifier(s) allow(s) addressing the concerned device. The first user data relating to the concerned device allows addressing the concerned first user.

The SR1 14 is arranged to receive from a second user, like e.g. the U2 100, (or an entity or a company) a message including a request for getting an (identified and registered) device along with an IMEI and/or the like, as a device identifier(s).

The SR1 14 records within the first database the (identified) second user in association with the device identifier(s), as a potential user of the concerned device.

The SR1 14 is configured to receive from an entity, like e.g. the SR2 16, a message including an identifier relating to a transaction. The SR1 14 records within the first database the transaction identifier in association with the device identifier(s).

The SR1 14 is arranged to generate or let generate a security code. The security code allows unlocking the concerned (associated) device. The SR1 14 records within the first database the security code in association with the device identifier(s).

The SR1 14 is adapted to send, based on the device identifier, to the concerned device a message including a command for locking the device along with the security code.

The SR1 14 is arranged to send to the concerned second user a message including the security code. Thus, only the second user who knows the security code is able to unlock a previously locked device.

The SR1 14 is configured to receive from the concerned device a message including information about the unlocked status of the device.

The SR1 14 is adapted to send to the SR2 16 a message including a confirmation relating to the transaction along with the transaction identifier.

The SR1 14 records within the first database, instead of the (identified) first user, the (identified) second user in association with the device identifier(s), as a user of the concerned device.

The SR2 16 is identified by a URI, a URL, an IP address or the like, as an identifier relating to the SR2 16 or second server identifier. The second server identifier allows addressing the SR2 16. The second server identifier is stored within a memory accessible (i.e. a server memory or a connected memory) from the SR1 14.

The SR2 16 may be operated by a transaction provider, like e.g. a bank operator.

The SR2 16 may be included within an ecosystem (not represented), like e.g., a bank back-end system, that comprises several servers managed by the transaction provider or on its behalf.

The SR2 16 supports an application for performing one or several transactions.

The SR2 16 is able to receive from another entity(ies), like e.g., a server and/or a device that is used by the U1 10 or the U2 100, a message including a request for performing a transaction along with corresponding transaction data, like e.g. a transaction amount, so as to perform a corresponding transaction.

The SR2 16 is able to send to another entity(ies), like e.g., a server and/or a device(s) that is(are) used by the U1 10 and the U2 100, a message including an identifier relating to a transaction, so as to identify a corresponding transaction.

**Figure 2** depicts an exemplary embodiment of a message flow 20 involving the device 12, the U1 10, the U2 100, the SR1 14 and the SR2 16, so as to secure a transaction relating to the device 12 from the U1 10 to the U2 100.

In the described scenario, it is assumed that the U1 10 uses a first TErminal (not represented), as TE1, and the U2 100 uses a second TErminal (not represented), as TE2. Each TE is equipped with a browser to communicate with the SR1 14 and possibly the SR2 16.

It is assumed that the device 12 is firstly not locked or unlocked.

After a possible downloading of an invention application or OS that is specific to the device 12, the device 12 is configured to implement the invention method.

The SR1 14 receives from the TE1 a message 22 including one or several identifiers relating to the device, as a subject of a transaction, and optionally e.g. a U1 10 name and/or a U1 10 IP address, as U1 10 data relating to the concerned device.

Alternatively, the SR1 14 receives from the TE1 a message 22 including a request for registering the device 12 accompanied with or including e.g. an IMEI, as an identifier relating to the device 12, and optionally e.g. an IP address termed IP1 relating to the U1 10 relating to the device 12, as U1 10 data.

The device identifier(s) allow(s) addressing the concerned device.

The U1 10 data allows addressing the U1 10.

Alternately or additionally, the U1 10 identifier(s) include(s) an email address, a first URI and/or a first URL.

The SR1 14 may send to the device 12 (or a chip incorporated within or coupled to the device 12) a request (not represented) for performing a device capability test. The device 12 (or the tied chip) tests one or several predetermined device capabilities. The device 12 (or the tied chip) registers a test result for each concerned device capability. After a possible enciphering and/or a possible signature of data to be sent by using a key (or a corresponding public key) that is previously shared with the SR1 14, the device 12 (or the tied chip) sends to the SR1 14 the (resulting) effective capabilities relating to the device 12 or the device capability test results relating to the device 12. Thus, the SR1 14 is able to disclose or send to the TE2 the effective device capability(ies), so that any potential second user is aware of them. The U2 100 receives optionally the effective device capability(ies). Thus, the U2 100 does not receive the device 12 without being aware of the device operating (or work) status.

The SR1 14 receives from e.g. the TE2 a message 24 including a request for getting the device 12 accompanied with or including e.g. the IMEI, as the device 12 identifier. The TE2 is identified by e.g. an IP address termed IP2 relating to the U2 100, as a U2 100 identifier. Alternately or additionally, the U2 100 identifier include(s) an email address, a second URI and/or a second URL.

After a possible negotiation between the U1 10 and the U2100 to get an agreement on a transaction amount, the TE2 may send, preferably through the SR1 14, to the SR2 16 a request for reserving a transaction amount for the concerned transaction.

The SR1 14 receives from the TE2 or the SR2 16 a message 26 including an identifier relating to a transaction. The SR1 14 registers or stored the transaction identifier in association with the concerned IMEI, as the device identifier.

The SR1 14 (or another server connected hereto) sends, based on the device identifier, to the device 12 (or a chip incorporated within or coupled to the device 12) a message 28 including a command for locking the device 12 accompanied with e.g. a PIN, as a security code. The security code allows unlocking the device 12.

The device 12 (or the chip) stores the received security code, as a reference security code, and locks 210 the device 12 by executing the command for locking the device 12. Thus, the device 12 changes to a locked status. The locked status prevents the device 12 from being used. Only a submission of the reference security code allows unlocking the device 12.

The SR1 14 (or another server connected hereto) sends to the TE2 a message 212 including the security code. Thus, the U2 100 is able to submit, through an MMI integrated or connected to the device 12, the received security code that allows using the device 12.

The U2 100 gets the device (not represented) possibly through e.g. a post mail or the like, or a meeting between the U1 10 and the U2 100.

Optionally, the device 12 resets a counter used for counting a number of attempts.

Then, the U2 100 provides the device 12 with the security code 214 by using e.g. the device MMI (or an MMI connected to the device 12).

The counter is incremented by a predetermined value, like e.g. one unit per attempt.

The device 12 (or the chip) stores (not represented) the security code provided by the U2 100.

The device 12 (or the chip) determines 216 whether the provided security code does or does not match the security code received from the SR1 14 (or another server).

If, possibly once a predetermined maximum number of attempts, like e.g. three or four, as a counter value, is reached and the provided security code does not match the received security code, as the reference security code, then the device 12 (or the chip) aborts 217 or terminates the launched process for securing the transaction. Then, optionally, the device 12 (or the chip) sends, through the SR1 14, to the SR2 16 a message (not represented) including a cancellation of the reserved transaction. Optionally, the device 12 (or the chip) sends, through the SR1 14, to the TE1 and/or the TE2 a message (not represented) including a cancellation of the reserved transaction. The SR1 14 sends to the TE1 a message (not represented) including the security code, so that the U1 10 unlocks the device 12 and may propose the device 12 as a subject of another transaction.

Otherwise, i.e. if the provided security code matches the received security code and possibly the counter value does not exceed the predetermined maximum number of attempts, the device 12 (or the chip) unlocks 218 the device 12. Thus, the device 12 changes to an unlocked status. Optionally, the device 12 connects, possibly through a local network, such as a Wifi network, to a network that includes or is connected to the SR1 14. The U2 100 is able to use the device 12.

Then, the device 12 sends, under possibly the control of the U2100, (i.e. when the U2 100 authorizes such a sending), to the SR1 14 a message 220 including information about the unlocked status of the device 12.

Optionally, the device 12 sends, possibly upon a SR1 14 request, preferably to a server which may administrate the device 12 a message (not represented) including stored data.

Optionally, the device 12 deletes or erases (not represented), possibly upon a SR1 14 request, the stored data.

The SR1 14 sends to the SR2 16 a message 222 including a confirmation relating to the possibly reserved transaction accompanied with the concerned (registered) transaction identifier.

The SR2 16 performs the possibly reserved transaction by debiting a U2 100 user account and crediting a U1 10 user account of the transaction amount.

Once the transaction is performed, the SR2 16 sends preferably to the SR1 14 a message (not represented) including information about a confirmation of the possibly reserved transaction.

Optionally, the SR1 14 sends preferably to a server which administrates the device 12 a message (not represented) including information about a confirmation of the possibly reserved transaction. Thus, the device administrator is able to re-configure or update the device 12, as to one or several applications to be supported by the device 12.

Optionally, the SR1 14 sends preferably to the TE1, the TE2 and/or the device 12 a message (not represented) including information about a confirmation of the possibly reserved transaction.

The invention solution is compatible with the existing network infrastructure.

The invention solution allows using a device to be transferred to a user only if the user submits to the device an expected security code.

The invention solution allows securing a transaction relating to the device 12.

## Claims

1. A method (20) for securing a transaction relating to a device,
**characterized in that** the method comprises the following steps:
- a) a first server receives a message (22) including at least one identifier relating to the device;
- b) the first server receives from a second user a message (24) including a request for getting the device;
- c) the first server receives a message (26) including an identifier relating to a transaction, the transaction identifier being associated with the device identifier;
- d) the first server or another server connected to the first server sends, based upon the device identifier, to the device a message (28) including a command for locking the device accompanied with a security code, the security code allowing to unlock the device;
- e) the device changes (210) to a locked status by executing the device locking command, the locked status preventing the device from being used;
- f) the first server or another server connected to the first server sends to the second user a message (212) including the security code;
- g) the second user gets the device;
- h) the second user provides the device with the security code (214);
- i) the device determines (216) whether the provided security code does or does not match the received security code;
- j) only if the provided security code matches the received security code, the device changes (218) to an unlocked status;
- k) the device sends to the first server a message (220) including information about the unlocked status of the device; and
- l) the first server sends to a second server a message (222) including a confirmation relating to the transaction accompanied with the transaction identifier.

2. Method according to claim 1, wherein, prior to sending the request for getting the device, the second user receives at least one effective capability relating to the device.

3. Method according to claim 2, wherein, prior to receiving the at least one effective capability relating to the device, the device or a chip incorporated within or coupled to the device tests at least one capability relating to the device and sends to the first server the at least one effective capability relating to the device.

4. Method according to claim 3, wherein, prior to sending the at least one effective capability relating to the device, the device or the chip enciphers and/or signs the at least one effective capability relating to the device by using at least one key, the at least one key or at least one corresponding public key being previously shared with the first server.

5. Method according to claim 3 or 4, wherein the at least one capability relating to the device comprises at least one element of a group comprising:
- a phone call capability;
- an SMS or email type message sending and/or receiving capability;
- an MMI capability;
- an Internet browsing capability;
- a contact-less message sending and/or receiving capability;
- a wifi message sending and/or receiving capability;
- a display screen capability;
- a touch sensitive surface capability.

6. Method according to any of claims 1 to 5, wherein, prior to changing to the unlocked status, the device sends to a third server stored data and/or the device erases stored data.

7. Method according to any of claims 1 to 6, wherein the device identifier includes at least one element of a group comprising:
- an IMEI;
- a URI;
- a URL;
- an IP address;
- an email address;
- a MAC address;
- an IMSI;
- an IMPI;
- an IMPU;
- a device certificate.

8. A device (12) for securing a transaction relating to the device,
**characterized in that** the device is configured to:
- receive a message (28) including a command for locking the device accompanied with a security code, the security code allowing to unlock the device;
- change (210) to a locked status by executing the device locking command, the locked status preventing the device from being used;
- be provided with the security code;
- determine (216) whether the provided security code does or does not match the received security code;
- change (218), only if the provided security code matches the received security code, to an unlocked status; and
- send to the first server a message (220) including information about the unlocked status of the device.

9. A first server (14) for securing a transaction relating to a device,
**characterized in that** the first server is configured to:
- receive a message (22) including at least one identifier relating to the device;
- receive from a second user a message (24) including a request for getting the device;
- receive a message (26) including an identifier relating to a transaction, the transaction identifier being associated with the device identifier;
- send, based upon the device identifier, to the device a message (28) including a command for locking the device accompanied with a security code, the security code allowing to unlock the device;
- send to the second user a message (212) including the security code;
- receive from the device a message (220) including information about the unlocked status of the device; and
- send to a second server a message (222) including a confirmation relating to the transaction accompanied with the transaction identifier.

10. A system for securing a transaction relating to a device,
**characterized in that**, the system comprising at least a device (12) and a first server (14), the first server is configured to:
- receive a message (22) including at least one identifier relating to the device;
- receive from a second user a message (24) including a request for getting the device;
- receive a message (26) including an identifier relating to a transaction, the transaction identifier being associated with the device identifier;
- send, based upon the device identifier, to the device a message (28) including a command for locking the device accompanied with a security code, the security code allowing to unlock the device;
**in that** the device is configured to change (210) to a locked status by executing the device locking command, the locked status preventing the device from being used;
**in that** the first server is configured to send to the second user a message (212) including the security code;
**in that** the device is configured to:
- be provided with the security code (214);
- determine (216) whether the provided security code does or does not match the received security code;
- change (218), only if the provided security code matches the received security code, to an unlocked status;
- send to the first server a message (220) including information about the unlocked status of the device; and
**in that** the first server is configured to send to a second server a message (222) including a confirmation relating to the transaction accompanied with the transaction identifier.
